# EUROPÄISCHE PATENTSCHRIFT

(11) **EP 1 430 221 B1**
(45) Veröffentlichungstag und Bekanntmachung des Hinweises auf die Patenterteilung: **12.07.2006**
(21) Anmeldenummer: 02777157.5
(22) Anmeldetag: 19.09.2002
(51) Int. Cl.: F03D 9/00, F03D 11/02

(54) **WINDKRAFTMASCHINE**
WIND POWER MACHINE
EOLIENNE

(30) Priorität: 25.09.2001 DE 10147013; 01.07.2002 DE 10229390
(43) Veröffentlichungstag der Anmeldung: 23.06.2004
(73) Patentinhaber: Nikolaus, Thomas, 78234 Engen (DE)
(72) Erfinder: Nikolaus, Thomas, 78234 Engen (DE)
(74) Vertreter: Weiss, Peter
(86) Internationale Anmeldenummer: PCT/EP2002/010533
(87) Internationale Veröffentlichungsnummer: WO 2003/029649

(56) Entgegenhaltungen:
- DE-A- 3 215 571
- DE-A- 3 714 858
- DE-A- 3 808 536
- DE-B- 2 623 233
- ES-A- 2 134 682

## Beschreibung

Die vorliegende Erfindung betrifft eine Windkraftmaschine zur Erzeugung von Energie, mit zumindest einem durch Wind antreibbaren Rotorelement und mit diesem direkt oder indirekt verbundenen Abnehmer.

Derartige Windkraftmaschinen sind im Markt in vielfältiger Form und Ausführung bekannt und werden zur Erzeugung von Energie, insbesondere zur Stromerzeugung eingesetzt. Herkömmliche Windkraftmaschinen sind meist aus einem Turm, an welchem sich drehbar ein Turmaufsatz anschliesst, gebildet. In diesem Turmaufsatz sind ein Generator, gegebenenfalls ein Getriebe und ein daran anschliessendes Rotorelement gelagert.

Das Rotorelement wird durch Wind angetrieben und überträgt eine rotative Bewegung, ggf. über ein dazwischen geschaltetes Getriebe, direkt auf einen Generator.

Nachteilig ist, dass das Gewicht des Generators, insbesondere eines sehr leistungsstarken Generators sehr hoch ist, und bei sehr hohen Windkraftmaschinen, mit hohen Türmen, oftmals bei hohen Windbelastungen, sehr starke Schwingungen auftreten, so dass die Windkraftmaschine abgeschaltet werden muss.

Ferner ist nachteilig, dass insbesondere durch das hohe Gewicht des Generators eine Montage erschwert ist, da aufwendige Krähne notwendig sind, um den Turmaufsatz auf den Turm aufzustellen.

Zudem ist nachteilig, dass die Wartungsarbeiten von Generator und ggf. dazwischengeschaltetem Getriebeelement im Turmaufsatz erfolgen, wobei das Wartungspersonal zeitintensiv den Turmaufsatz besteigen muss. Die Ersatzteile müssen ebenfalls noch oben in den Turmaufsatz transportiert werden.

Zudem ist nachteilig bei herkömmlichen Windkraftmaschinen bzw. Windparks, dass bei sehr hohen Windgeschwindigkeiten, diese auf Grund der sehr hohen Drehzahlen des Rotorelementes zwangsweise abschalten, damit diese nicht in entsprechende gefährliche Schwingungen versetzt werden.

Zudem können, wie es aus der Weibullschen Verteilung hervorgeht, nur ganz bestimmte Windspektren bzw. -bereiche optimal ausgenutzt und in Leistung umgesetzt werden, was nachteilig ist. Nachteilig ist ferner, dass nur ein ganz bestimmter Teil der Energie mit der herkömmlichen Technik genutzt wird. Zudem müssen derartige Windkraftmaschinen, was insbesondere die Drehung des Turmaufsatzes betrifft, zwangsgesteuert werden, was ebenfalls einen Kosten- und Regelungsaufwand bedeutet.

Die DE 32 15 571 A1 offenbart ein Verfahren und eine Vorrichtung zur Verbesserung von Betriebscharakteristiken eines Windenergiekonverters. Dieser dient der hydraulischen Energieübertragung zum Betreiben einer Tiefbrunnenpumpe.

Die DE 38 08 536 offenbart eine Windkraftanlage zur Erzeugung von Trinkwasser mit dem Verfahren der UmkehrOsmose. In einem Turm wird Rohrwasser zum Versorgen der Trinkwasseranlage mittels einem Pumpensatz, die als Kreiselpumpen ausgebildet sind, mittels erzeugtem Unterdruck eingepumpt.

Die DE 26 23 233 betrifft eine Anordnung zur Anpassung eines Windrades an einen elektrischen Generator, wobei das Drehmoment des Rotors direkt in den Wechselstromgenerator eingeleitet wird.

Der vorliegenden Erfindung liegt die Aufgabe zu Grunde eine Windkraftmaschine der eingangs genannten Art zu schaffen, welche die genannten Nachteile beseitigt, und mit welcher auf kostengünstige und effektive Weise die genutzte Energie im Wind bezogen auf eine Windkraftmaschine wesentlich erhöht und somit der Gesamtwirkungsgrad einer Windkraftmaschine verbessert werden soll. Ferner sollen die Wartungskosten, Herstellungskosten und Montagekosten minimiert und die Leistung und Standzeit der Windkraftmaschine soll gesteigert werden.

Zur Lösung dieser Aufgabe führen, die Merkmale des Patentanspruches 1 sowie die Merkmale des nebengeordneten Patentanspruches 2.

Bei der vorliegenden Erfindung wird ein Rotorelement direkt oder mit jeweils einem dazwischen geschalteten Getriebe mit einer Hydraulikpumpe verbunden. In der Hydraulikpumpe wird die rotative Bewegung des Rotorelementes umgesetzt in hydraulischen Druck, welcher über Leitungen, die vorzugsweise im Inneren des Turmes der Windkraftmaschine in dessen Bodenbereich geführt werden, an einen Abnehmer weitergeleitet werden. Vorzugsweise wird der hydraulische Druck einem Wandler zugeführt, welcher Druckenergie des aufgebauten Hydraulikdruckes in eine rotative Bewegung zum Antreiben eines beliebigen Abnehmers, vorzugsweise eines Generators umsetzt. Über eine entsprechende Rücklaufleitung wird die Hydraulikflüssigkeit wieder der Hydraulikpumpe im Turmaufsatz zugeführt.

Derartige Hydraulikpumpen sind wesentlich kleiner und kostengünstiger, leichter herzustellen und zu betreiben, als herkömmliche Windkraftmaschinen mit Generatoren im Turmaufsatz. Die Hydraulikpumpen lassen sich daher eher leicht, nahezu wartungsfrei in einen Turmaufsatz einer Windkraftmaschine einsetzten und an eine Rotorwelle des Rotorelementes anschliessen.

Von Vorteil ist hierbei bei der vorliegenden Erfindung, dass der Abnehmer, der ein beliebiger Abnehmer sein kann, vorzugsweise jedoch ein Generator, nahe am Boden oder im Bodenbereich des Turmes oder ausserhalb des Turmes im Bodenbereich angeordnet werden kann.

Dieser ist dann leicht zu warten und gegebenenfalls bei Verschleiss zu ersetzen.

Ein weiterer wesentlicher Vorteil ist, dass an den einem Wandler bzw. den einem Abnehmer, insbesondere Generator eine Mehrzahl von Windkraftmaschinen gegebenenfalls auch unterschiedlicher Bauart bspw. eines Windparks anschliessen lässt, so dass lediglich ein Generator zur Verfügung gestellt werden muss, um die in den Hydraulikpumpen erzeugte Druckenergie in elektrische Energie umzuwandeln.

Hierdurch lassen sich Windparks wesentlich kostengünstiger auslegen, betreiben und warten.

Ferner hat sich als vorteilhaft erwiesen, zur Regelung insbesondere zur Drehzahlbegrenzung des Rotorelementes für kritische Drehzahlen ein Drosselelement in die Leitung einzusetzen, welches regelbar ist, so dass über die Ströhmungsgeschwindigkeit durch die Drossel eine kritische Geschwindigkeit des Rotorelements regelbar ist. Hierdurch lässt sich das Rotorelement sehr leicht, verschleissfrei und kostengünstig abbremsen. Die aufwendigen schweren herkömmlichen Bremsen können daher entfallen.

Auch durch das Einsetzten von regelbaren Ventilen in die Leitung sowie auch Rücklaufleitung oder gegebenenfalls in die Hydraulikpumpe selbst, lässt sich das Rotorelement drehfest festlegen, bzw. die Windkraftmaschine lässt sich auf einfache und kostengünstige Weise verschleissfrei abschalten. Dies soll ebenfalls im Rahmen der vorliegenden Erfindung liegen.

Im Rahmen der vorliegenden Erfindung soll auch liegen, dass als Abnehmer beispielsweise eine Pumpe angeschlossen werden kann. Mittels dieser Pumpe lässt sich beispielsweise Wasser in ein energetisch höher gelegenes Reservoir pumpen, um dann wieder in, beispielsweise Spitzenlastzeiten mittels diesem höhergelegenen Wasser eine niedrig gelegenere Turbine mit anschliessendem Generator zur Stromerzeugung zu betreiben. Hierdurch kann beispielsweise in Spitzenlastzeiten sehr schnell Energie bereitgestellt werden, sollte beispielsweise die Windkraftmaschinen geringere Leistungen abgeben. Hierdurch lässt sich insgesamt eine Windkraftmaschine, insbesondere ein Windpark gestalten, welcher auch Einfluss auf unterschiedliche Leistungen, Winde, Flauten oder Spitzenlastzeiten nehmen kann.

Bei der vorliegenden Erfindung hat sich ferner als besonders vorteilhaft erwiesen, eine Mehrzahl von Hydraulikpumpen einer einzelnen Windkraftmaschine zuzuordnen, wobei die Hydraulikpumpen ggf. in unterschiedlichen Leistungsgruppen unterteilt sein können. Die einzelnen Hydraulikpumpen lassen sich entsprechend der Drehzahl bzw. leistungsabhängig vom Rotorelement ansteuern bzw. Regeln, so dass auch sehr hohe Windgeschwindigkeiten oder äusserst niedrige Windgeschwindigkeiten das Rotorelement antreiben können und eine Nenndrehzahl auf Grund der zuschaltbaren Pumpen regelbar, insbesondere steuerbar ist. Hierdurch lässt sich die Energieausbeute, hinsichtlich der Weibullschen Verteilung optimieren, so dass über grosse Bereiche eine optimale Ausbeute bzw. Umsetzung der Windenergie möglich ist.

Ferner hat sich als vorteilhaft erwiesen, dass eine Mehrzahl von Abnehmern bzw. Generatoren von einer oder zumindest einer Mehrzahl von Windkraftmaschinen versorgt werden können, so dass entsprechend leistungsspezifisch, bzw. druckspezifisch die Abnehmer bzw. Generatoren ggf. mit vorgeschalteten Wandlern betrieben werden können. Dabei können bspw. Generatoren in unterschiedlichen Leistungsstufen und in unterschiedlicher Anzahl wie bspw. 100 kW, 250 kW 350 kW usw. in einem Windpark vorgesehen sein, bzw. an eine Mehrzahl von Windkraftmaschinen unmittelbar angeschlossen sein, so dass für niedrige Leistungsbereiche bei wenig Wind, kleine Generatoren mit kleinerer Leistung optimal und wirkungsgradoptimiert, betrieben werden können. Dies soll ebenfalls im Rahmen der vorliegenden Erfindung liegen.

Zudem hat sich als vorteilhaft erwiesen, dass durch den sehr leicht gebildeten Turmaufsatz 4 dieser nicht zwangsgesteuert mittels Elektromotoren od. dgl. gegen den Wind ausgerichtet werden muss, sondern dass dieser ggf. rudergesteuert mechanisch betrieben werden kann. Dies ist ebenfalls ein erheblicher Vorteil bei der vorliegenden Erfindung.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht auf eine erfindungsgemässe Windkraftmaschine;
Figur 2 eine schematisch dargestellte Seitenansicht auf eine Mehrzahl von Windkraftmaschinen;
Figur 3 eine schematisch dargestellte Draufsicht auf eine Mehrzahl von Windkraftmaschinen;
Figur 4 eine schematisch dargestellte Seitenansicht auf ein weiteres Ausführungsbeispiel einer Windkraftmaschine gemäss Figur 1;
Figur 5 eine schematisch dargestellte Seitenansicht auf die Windkraftmaschine gemäss Figur 4, angeschlossenen an eine Mehrzahl von Generatoren bzw. Abnehmern;
Figur 6 eine schematisch dargestellte Draufsicht auf ein weiteres Ausführungsbeispiel auf eine Mehrzahl von Windkraftmaschinen als weiteres Ausführungsbeispiel gemäss Figur 3.

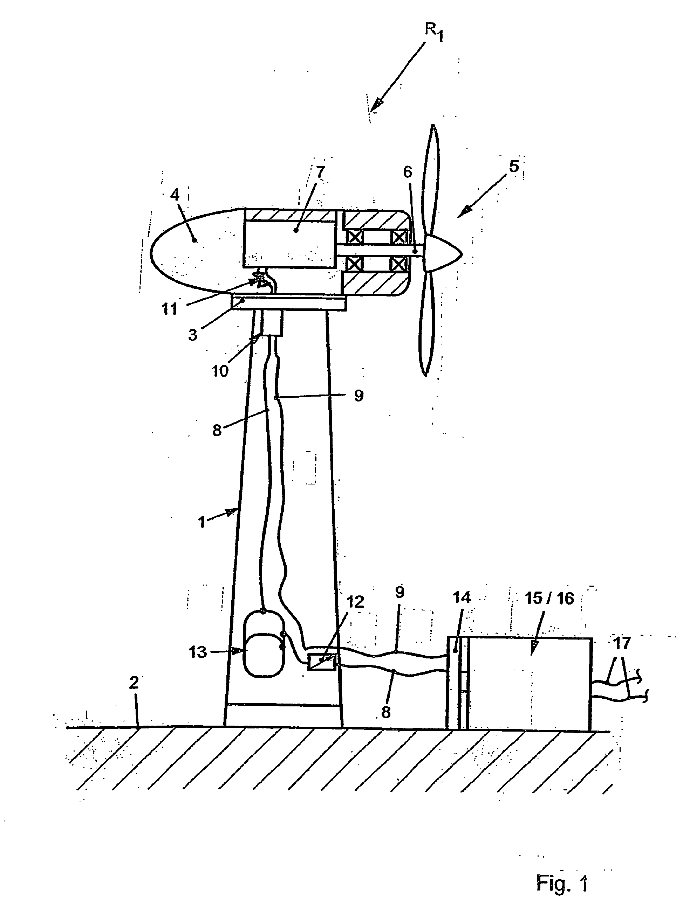

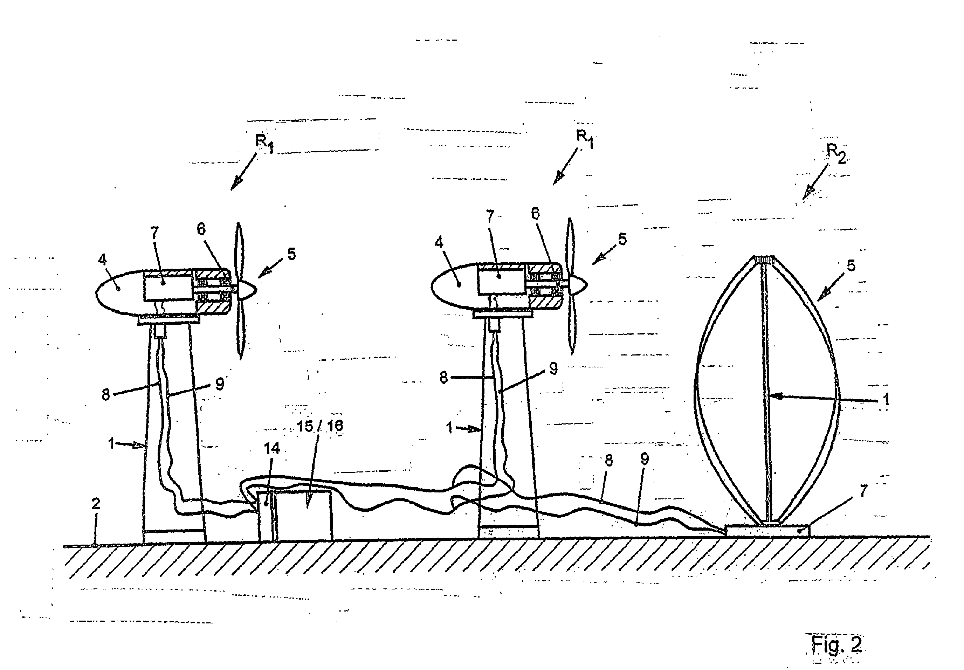

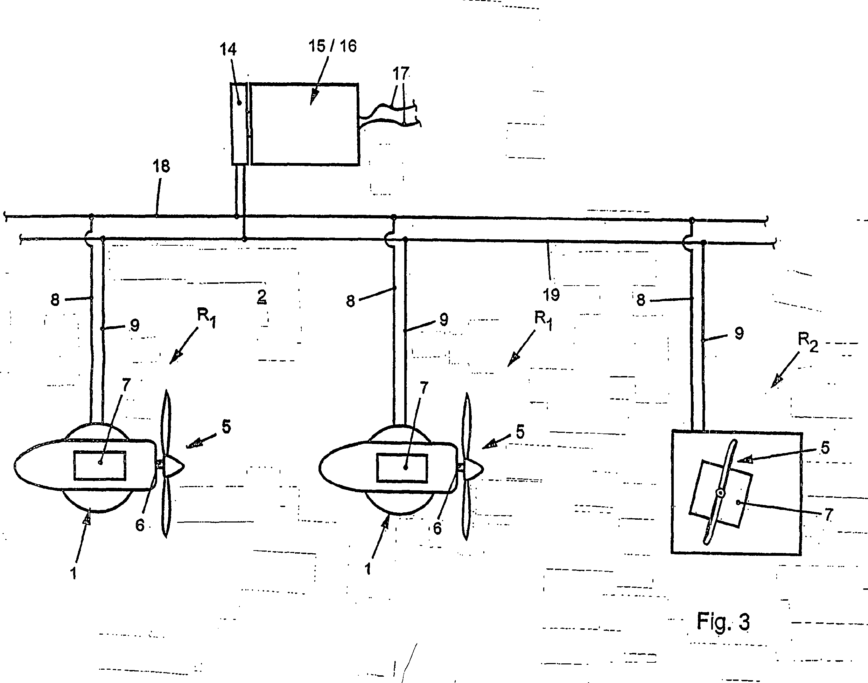

Gemäss Figur 1 weist eine erfindungsgemässe Windkraftmaschine R₁ einen Turm 1 auf, welcher auf einem Untergrund 2 aufgestellt ist. Dem Turm 1 sitzt über ein Lagerelement 3 verdrehbar ein Turmaufsatz 4 auf, welcher zumindest ein Rotorelement 5 trägt.

Das Rotorelement 5 wird durch Wind rotativ um eine Rotorwelle 6 angetrieben.

Erfindungsgemäss schliesst die Rotorwelle 6 und damit das Rotorelement 5 an eine Hydraulikpumpe 7 an. Durch die rotative Bewegung des Rotorelementes 5 und der Rotorwelle 6 lässt sich die Hydraulikpumpe 7 antreiben und erzeugt einen hydraulischen Druck, welcher über eine erste Leitung 8 weitergeleitet wird. Ferner schliesst eine Rücklaufleitung 9 ebenfalls an die Hydraulikpumpe 7 an.

Vorzugsweise münden Leitung 8 und Rücklaufleitung 9 zwischen Hydraulikpumpe 7 in eine Kupplung 10 ein, welche eine rotative Bewegung des Turmaufsatzes 4 gegenüber dem starren Turm 1 kompensiert und ausgleicht.

Zwischen Kupplung 10 und Hydraulikpumpe 7 ist vorzugsweise in die Leitung 8 ein Drosselelement 11, insbesondere eine regelbare Drossel eingesetzt, wobei dort, oder wie es in Figur 1 dargestellt ist, nahe dem Untergrund 2, in die Leitung 8 zusätzlich oder alternativ ein regelbares Ventil 12 eingesetzt sein kann.

Ferner soll im Rahmen der vorliegenden Erfindung liegen in die Leitung 8 eine Druckausgleichseinrichtung 13, insbesondere einen Druckausgleichsbehälter einzusetzen. Die Leitung 8 oder Rücklaufleitung 9 schliessen, wie es insbesondere in Figur 1 dargestellt ist, vorzugsweise an einen extern gelagerten Wandler 14 mit anschliessendem Abnehmer 15 bzw. Generator 16 an, wobei im Wandler 14 die von der Hydraulikpumpe 7 erzeugte Druckenergie in eine rotative Bewegung umgewandelt wird, um den Abnehmer 15, vorzugsweise den Generator 16 zur Stromerzeugung anzutreiben. Der Generator 16 kann über eine Netzeinspeisung 17 die erzeugte Energie weiterleiten. Dabei soll bei der vorliegenden Erfindung auch mit umfasst sein den Abnehmer 15, insbesondere den Generator 16 innerhalb des Turmes 1 anzuordnen oder dort unterzubringen.

Wichtig bei der vorliegenden Erfindung ist ferner, dass der Abnehmer 15 bzw. Generator 16 nahe im Bereich des Untergrundes 2 im Turm 1 oder extern ausserhalb des Turmes 1 aufstellbar ist. Hierdurch wird das Gewicht, insbesondere des Turmaufsatzes 4 erheblich reduziert, da eine Hydraulikpumpe 7 wesentlich leichter ausgebildet ist, als ein herkömmlicher Generator.

Ein weiterer Vorteil bei der vorliegenden Erfindung ist, dass über die Drossel 11 sich die Durchströmgeschwindigkeit in der Leitung 8 exakt regeln lässt. Hierdurch kann bspw. eine kritische Geschwindigkeit des Rotorelementes 5 abgeregelt oder begrenzt werden. Die Drossel 11, welche mit einer hier nicht dargestellten Steuerung in Verbindung steht, kann daher das Rotorelement 5, insbesondere durch die Begrenzung des Durchflusses durch die Hydraulikpumpe 7 abbremsen.

Auch ein Abschalten, bspw. zu Wartungszwecken ist leicht denkbar, indem bspw. das Ventil 12, hier nicht dargestellt, über eine Steuerung geschlossen wird, wobei hierdurch das Rotorelement 5, und damit die Hydraulikpumpe 7 festgelegt wird.

Dabei soll auch im Rahmen der vorliegenden Erfindung liegen, das Ventil 12 bspw. zwischen Kupplung 10 und Hydraulikpumpe 7 in die Leitung 8 und/oder Rücklaufleitung 9 einzusetzen. Hierauf sei die Erfindung nicht beschränkt.

Um Pulsationen in Leitung 8 und/oder Rücklaufleitung 9 sowie durch böhige Windbeaufschlagung des Rotorelementes 5 auszugleichen, hat sich als günstig erwiesen ein Druckausgleichsbehälter 13 vorzugsweise in die Leiung 8 einzusetzen.

In dem Ausführungsbeispiel der vorliegenden Erfindung gemäss Figur 2 sind eine Mehrzahl von Windkraftmaschinen R₁, R₂ in einem Windpark auf einem Untergrund 2 aufgestellt, wobei auch im Rahmen der vorliegenden Erfindung liegen soll, Windkraftmaschinen R₁, R₂ unterschiedlicher Bauweise in oben beschriebener Weise zu betreiben. Dabei kann die Windkraftmaschine R₂ radial um den Turm 1 umlaufende Rotorelemente 5 aufweisen, welche die Hydraulikpumpe 7 in oben beschriebener Weise antreiben.

Über die entsprechenden Leitungen 8 und Rücklaufleitungen 9 können bspw. mehrere Windkraftmaschinen R₁, R₂ an zumindest einen Wandler 14 bzw. einem Abnehmer 15 vorzugsweise einen Generator 16 angeschlossen werden, so dass sich auch die Gesamtkosten eines Windparks durch die Verwendung von wenig oder lediglich eines einzigen Generators 16 beim Einsatz von mehreren Windkraftmaschinen R₁, R₂ erheblich reduzieren lassen.

In dem Ausführungsbeispiel der vorliegenden Erfindung gemäss Figur 3 ist aufgezeigt, wie eine Merhzahl von Windkraftmaschinen R₁, R₂ über die Leitungen 8, 9 an eine gemeinsame Zulaufleitung 18 und gemeinsame Rücklaufleitungen 19 parallel anschliessbar sind, welche mit dem Wandler 14 in Verbindung stehen.

Hierdurch lässt sich bspw. auch ein Druckausgleich einzelner Windkraftmaschinen R₁, R₂ untereinander realisieren, so dass der Wandler 14 einen kontinuierlichen Druck und eine kontinuierlichere Antriebsleistung zum Antreiben des Abnehmers 15 bzw. Generators 16 erfährt.

Dabei kann daran gedacht sein in die einzelnen Leitungen 8 Rückschlagventile einzusetzten.

Möglich ist auch, dass eine Mehrzahl von Wandlern 14 mit anschliessenden Generatoren 16 an eine Mehrzahl von Windkraftmaschinen angeschlossen werden können, um eine sehr grosse Ausgangsleistung zu erhalten.

Auch soll daran gedacht sein an den Wandler 14 eine Mehrzahl von Abnehmern 15 bzw. Generatoren 16 anzuschliessen. Hierauf sei die Erfindung nicht beschränkt.

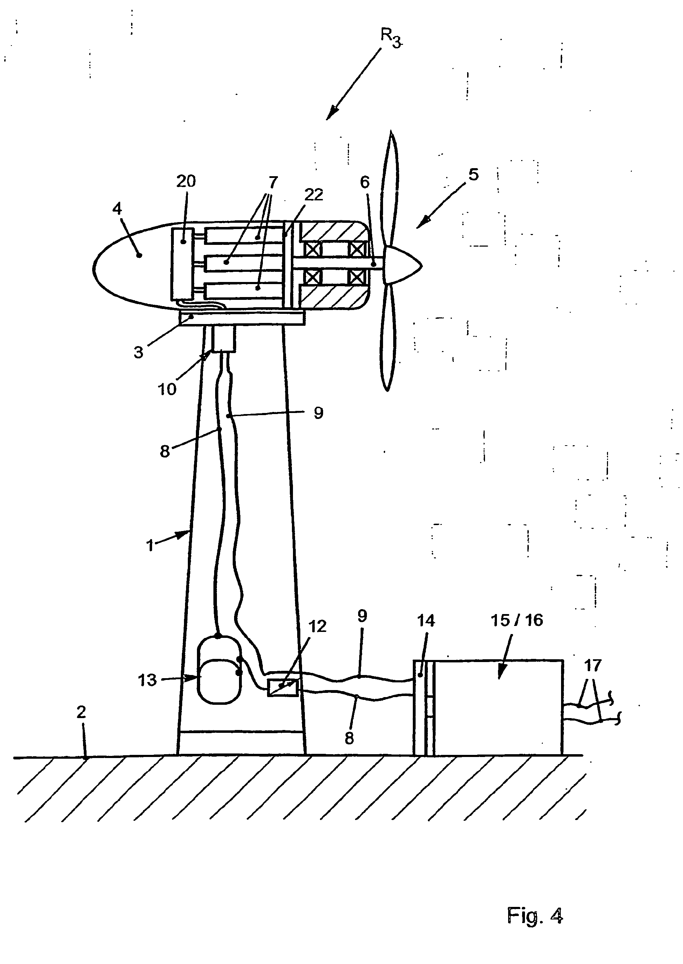

In einem weiteren bevorzugten Ausführungsbeispiel der vorliegenden Erfindung gemäss Figur 4 ist eine Windkraftmaschine R₃ aufgezeigt, die in etwa der Windkraftmaschine R₁, wie sie in Figur 1 dargestellt ist, entspricht.

Unterschiedlich ist, dass eine Mehrzahl von Hydraulikpumpen 7 im Turmaufsatz 4 der Windkraftmaschine R₃ zugeordnet sind.

Dabei sind die einzelnen Hydraulikpumpen, vorzugsweise über ein gemeinsames Getriebeelement 22 an die Rotorwelle 6 des Rotorelementes 5 angeschlossen.

Als Getriebeelement 22 können Zahnriemen, Sonnenräder, Zahnräder od. dgl. verwendet werden, die direkt oder mit einer wählbaren Übersetzung die einzelnen Hydraulikpumpen 7 an die Drehbewegung der Rotorwelle 6 des Rotorelementes 5 anschliessen bzw. koppeln.

Wichtig ist jedoch bei der vorliegenden Erfindung, dass über eine Regeleinrichtung 20, die bevorzugt ebenfalls im Turmaufsatz 4 vorgesehen ist, sich die einzelnen Hydraulikpumpen 7 entsprechend der Drehzahl des Rotorelementes 5 wahlweise zuschalten lassen.

Wichtig ist ferner bei der vorliegenden Erfindung, dass die einzelnen Hydraulikpumpen 7 bspw. in unterschiedlichen Leistungsstufen in der Windkraftmaschine R₃ bzw. im Turmaufsatz 4 vorgesehen sind.

Auf diese Weise lässt sich das Rotorelement 5 immer mit einer wählbaren Nenndrehzahl betreiben, so dass auch Bereiche mit hohen Windstärken hierdurch optimal ausgenutzt werden können. Auf diese Weise lassen sich hohe Drehzahlen des Rotorelementes 5 vermeiden und es lassen sich optimal in allen Windstärkenbereichen die Drehzahl des Rotorelementes 5 regeln bzw. beschränken, so dass eine Leistungsausbeute durch alle Windstärkenbereiche optimiert ist. Hierzu können von einer bis alle Hydraulikpumpen 7 auch in Kombination zugeschaltet werden.

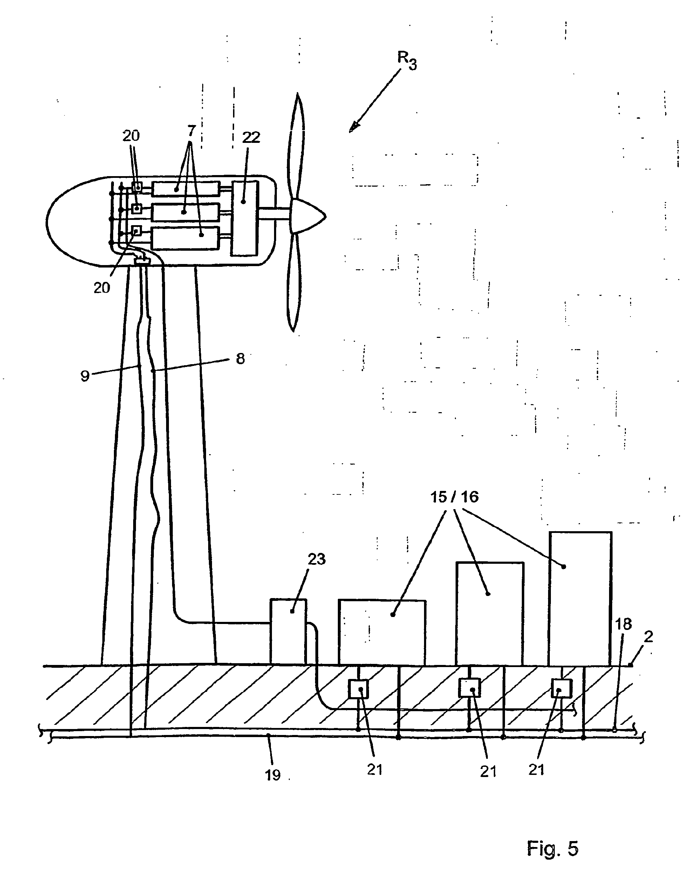

In dem Ausführungsbeispiel der vorliegenden Erfindung gemäss Figur 5 ist in einem ähnlichen Ausführungsbeispiel dargestellt, dass sich eine Mehrzahl von Abnehmern 15 bzw. Generatoren 16 an zumindest eine Windkraftmaschine R₃ anschliessen lassen, wobei die einzelnen Abnehmer 15 bzw. Generatoren 16 über hier angedeutete Steuereinrichtungen 21 mit einer gemeinsamen Leitung 8 bzw. Rücklaufleitung 9 der Windkraftmaschine R₃ über eine gemeinsame Zulaufleitung 18 und eine gemeinsame Rücklaufleitung 19 angeschlossen sind.

Auch hier ist von Vorteil, dass je nach Leistung der zumindest einen Windkraftmaschine R₃, welche als druckbeaufschlagtes Medium, in die Zulaufleitung 18 bzw. Rücklaufleitung 19 eingespeist wird, leistungsspezifisch unterschiedliche Abnehmer 15 bzw. Generatoren 16 bspw. mit unterschiedlichen Ausgangsleistungen wahlweise, insbesondere regelbar über eine gemeinsame Kontrolleinheit 23, zugeschaltet werden können.

Hierdurch wird gewährleistet, dass bei äusserst geringen Windstärken, lediglich ein leistungsmässig kleiner Abnehmer 15 bzw. Generator 16 gespeist wird, so dass auch hier die Leistung, insbesondere der Generator optimiert ausgenutzt wird.

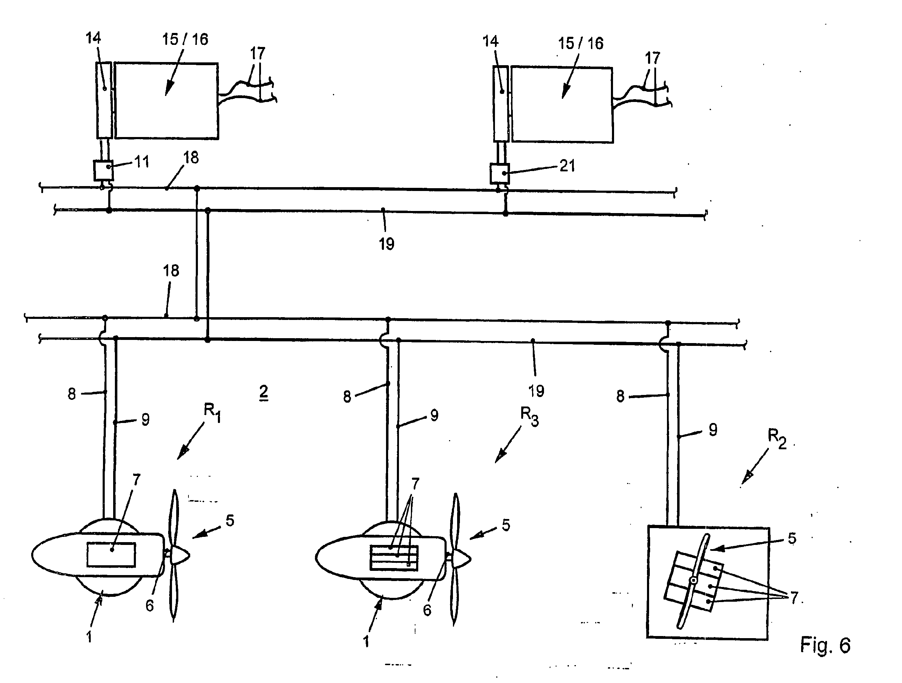

Dabei soll auch im Rahmen der vorliegenden Erfindung liegen, wie es in Figur 6 dargestellt ist, dass eine Mehrzahl von Abnehmern 15 bzw. Generatoren 16 jeweils separat über Steuereinrichtungen 21 an eine Mehrzahl von Hydraulikpumpen 7 bzw. Windraftmaschinen R₁ bis R₃ angeschlossen ist, wobei jede einzelne Windkraftmaschine R₁ bis R₃ windspezifisch über eine Mehrzahl von Hydraulikpumpen regelbar ist, um eine optimierte Leistung zu erhalten, wobei leistungsspezifische Abnehmer 15 und/oder Generatoren 16 einzeln, zusammen, insbesondere regelbar und wahlweise über Steuereinrichtungen 21 zuschaltbar sind.

### Positionszahlenliste

| | | | | | |
|---|---|---|---|---|---|
| 1 | Turm | 34 | | 67 | |
| 2 | Untergrund | 35 | | 68 | |
| 3 | Lagerelement | 36 | | 69 | |
| 4 | Turmaufsatz | 37 | | 70 | |
| 5 | Rotorelement | 38 | | 71 | |
| 6 | Rotorwelle | 39 | | 72 | |
| 7 | Hydraulikpumpe | 40 | | 73 | |
| 8 | Leitung | 41 | | 74 | |
| 9 | Rücklaufleitung | 42 | | 75 | |
| 10 | Kupplung | 43 | | 76 | |
| 11 | Drosselelement | 44 | | 77 | |
| 12 | Ventil | 45 | | 78 | |
| 13 | Druckausgleichsbe hälter | 46 | | 79 | |
| 14 | Wandler | 47 | | | |
| 15 | Abnehmer | 48 | | R₁ | Windkraftmaschine |
| 16 | Generator | 49 | | R₂ | Windkraftmaschine |
| 17 | Netzeinspeisung | 50 | | R₃ | Windkraftmaschine |
| 18 | Zulaufleitung | 51 | | | |
| 19 | Rückleitung | 52 | | | |
| 20 | Regeleinrichtung | 53 | | | |
| 21 | Steuereinrichtung | 54 | | | |
| 22 | Getriebeelement | 55 | | | |
| 23 | Kontrolleinheit | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Windkraftmaschine zu Erzeugung von Energie, mit zumindest einem durch Wind antreibbaren Rotorelement (5) und mit diesem direkt oder indirekt verbundenen Abnehmer (15),
**dadurch gekennzeichnet,**
**dass** das Rotorelement (5) direkt oder indirekt über ein zwischen Rotorelelement (5) und Hydraulikpumpen (7) dazwischengeschaltetes Getriebeelement (22) eine Mehrzahl von Hydraulikpumpen (7) antreibt, wobei die Mehrzahl von Hydraulikpumpen (7) leistungsabhängig vom Rotorelement (5), über zumindest eine Regeleinrichtung (20) zuschaltbar sind und die Mehrzahl der Hydraulikpumpen (7) in einem Turmaufsatz (4) angeordnet sind und die Hydraulikpumpen (7) zur Leitungsoptimierung in unterschiedlichen Leistungsstufen zuschaltbar sind.

2. Windkraftmaschine zu Erzeugung von Energie, mit zumindest einem durch Wind antreibbaren Rotorelement (5) und mit diesem direkt oder indirekt verbundenen Abnehmer (15), **dadurch gekennzeichnet, dass** eine Mehrzahl von Windkraftmaschinen mit einer Mehrzahl von Hydraulikpumpen (7) in einem Turmaufsatz angeordnet, eine Mehrzahl von Abnehmer (15) leistungsabhängig regelbar speist, wobei die Abnehmer (15) in unterschiedlichen Leistungsstufen unterteilt sind, und über zumindest eine Steuereinrichtung (21) entsprechend die von den Windkraftmaschinen (R₁ bis R₃) abgegebene Leistung, leistungsspezifisch auf die Abnehmer (15) verteilbar ist.

3. Windkraftmaschine nach Anspruch 1 oder 2, **dadurch gekennzeichnet, dass** eine Mehrzahl von Windkraftmaschinen eine Mehrzahl von zuschaltbaren Hydraulikpumpen (7) aufweist, die eine Mehrzahl von regelbaren, zuschaltbaren Generator (16) und/oder Abnehmer (15) leistungsspezifisch versorgt.

4. Windkraftmaschine nach wenigstens einem der Ansprüche 1 bis 3, **dadurch gekennzeichnet, dass** die Abnehmer (15) Generatoren (16) sind.

5. Windkraftmaschine nach wenigstens einem der Ansprüche 1 bis 4, **dadurch gekennzeichnet, dass** eine Mehrzahl von Generatoren (16) und/oder Abnehmern (15), in unterschiedlichen Leistungsstufen zumindest einer Windkraftmaschine (R₁ bis R₃), insbesondere zumindest einer Hydraulikpumpe (7), jeweils einzeln regelbar und zumindest teilweise leistungs- und/oder druckabhängig über eine Kontrolleinheit (23) ansteuerbar sind.

6. Windkraftmaschine nach wenigstens einem der Ansprüche 1 bis 5, **dadurch gekennzeichnet, dass** die zumindest eine Hydraulikpumpe (7) mit einem Abnehmer (15), insbesondere mit einem Generator (16) in Verbindung steht und diesen antreibt.

7. Windkraftmaschine nach wenigstens einem der Ansprüche 1 bis 6, **dadurch gekennzeichnet, dass** der Abnehmer (15), insbesondere der Generator (16) extern von der Windkraftmaschine, insbesondere vom Rotorelement (5) über die Hydraulikpumpe (7) antreibbar ist.

8. Windkraftmaschine nach wenigstens einem der Ansprüche 1 bis 7, **dadurch gekennzeichnet, dass** eine Mehrzahl von einzelnen Windkraftmaschinen (R₁, R₂) mit Rotorelementen (5) und angeschlossenen Hydraulikpumpen (7) an einen gemeinsamen Abnehmer (15), insbesondere an einem gemeinsamen Generator (16) anschliessbar sind, und diesen antreiben.

9. Windkraftmaschine nach wenigstens einem der Ansprüche 1 bis 8, **dadurch gekennzeichnet, dass** die Hydraulikpumpe (7) direkt an das Rotorelement (5) anschliesst und über Leitungen (8, 9) mit einem Wandler (14) des Generators (16) in Verbindung stehen, wobei der Wandler (14) den Generator (16) antreibt.

10. Windkraftmaschine nach wenigstens einem der Ansprüche 1 bis 9, **dadurch gekennzeichnet, dass** zur Steuerung und/oder Regelung und/oder zum Abbremsen in zumindest einer Leitung (8, 9) ein regelbares Drosselelement (11) und/oder ein regelbares Ventil (12) eingesetzt ist.

11. Windkraftmaschine nach wenigstens einem der Ansprüche 1 bis 10, **dadurch gekennzeichnet, dass** zwischen Hydraulikpumpe (7) und Abnehmer (15), insbesondere Generator (16) zumindest eine Druckausgleichseinrichtung (13), insbesondere ein Druckausgleichsbehälter zum Druck- und/oder Pulsationsausgleich eingesetzt ist.

12. Windkraftmaschine nach wenigstens einem der Ansprüche 1 bis 11, **dadurch gekennzeichnet, dass** das Rotorelement (5) über eine Rotorwelle (6) die Hydraulikpumpe (7) antreibt.

13. Windkraftmaschine nach wenigstens einem der Ansprüche 1 bis 12, **dadurch gekennzeichnet, dass** diese einen Turm (1) und endseits einem drehbaren Turmaufsatz (4) aufweist, wobei im Turmaufsatz (4) das Rotorelement (5) drehbar gelagert ist und dort mit der Hydraulikpumpe (7) in Verbindung steht.

14. Windkraftmaschine nach Anspruch 13, **dadurch gekennzeichnet, dass** über eine Kupplung (10) rotativ endkoppelt die Leitungen (8, 9) durch den Turm (1) zu einem im Turm (1) oder am Turm (1) oder extern vom Turm (1) angeordneten Abnehmer (15), insbesondere Generator (16) geführt sind.

15. Windkraftmaschine nach Anspruch 13 oder 14, **dadurch gekennzeichnet, dass** mehrere Hydraulikpumpen (7) unterschiedlicher Windkraftmaschinen (R₁, R₂) an zumindest einen Generator (16) anschliessbar sind.

16. Windkraftmaschine nach wenigstens einem der Ansprüche 1 bis 15, **dadurch gekennzeichnet, dass** mehrere Windkraftmaschinen (R₁, R₂) jeweils über Leitung (8) und Rücklaufleitung (9) an eine gemeinsame Zulaufleiung (18) und eine gemeinsame Rücklaufleitung (19) anschliessbar sind, an welche zumindest ein Wandler (14) und an diesen zumindest ein Abnehmer (15) und/oder Generator (16) anschliesst.

17. Windkraftmaschine nach wenigstens einem der Ansprüche 1 bis 16, **dadurch gekennzeichnet, dass** der Abnehmer (15) als Pumpe zum Fördern von Wasser in ein höhergelegenes Reservoir ausgebildet ist.

18. Windkraftmaschine nach Anspruch 17, **dadurch gekennzeichnet, dass** das höhergelegene Reservoir mit einer niedriger gelegenen Turbine zum Antreiben eines Generators (16) in Verbindung steht.

## Claims

1. Wind power machine for generating energy, having at least one wind-drivable rotor element (5) and a consumer (15) connected directly or indirectly thereto,
**characterized in**
**that** the rotor element (5) drives a plurality of hydraulic pumps (7) directly or indirectly via a gear element (22) disposed between rotor element (5) and hydraulic pumps (7), wherein the plurality of hydraulic pumps (7) are connectable to the system output-dependently by the rotor element (5) via at least one control device (20) and the plurality of hydraulic pumps (7) are disposed in a tower attachment (4) and the hydraulic pumps (7) for optimum conduction are connectable to the system in different power ranges.

2. Wind power machine for generating energy, having at least one wind-drivable rotor element (5) and a consumer (15) connected directly or indirectly thereto, **characterized in that** a plurality of wind power machines having a plurality of hydraulic pumps (7) disposed in a tower attachment supply a plurality of consumers (15) in an output-dependently controllable manner, the consumers (15) being subdivided into different power ranges, and by means of at least one control device (21) are distributable in accordance with the power supplied by the wind power machines (R₁ to R₃) in an output-specific manner to the consumers (15).

3. Wind power machine according to claim 1 or 2, **characterized in that** a plurality of wind power machines has a plurality of hydraulic pumps (7), which are connectable to the system and in an output-specific manner supply a plurality of controllable, connectable generators (16) and/or consumers (15).

4. Wind power machine according to at least one of claims 1 to 3, **characterized in that** the consumers (15) are generators (16).

5. Wind power machine according to at least one of claims 1 to 4, **characterized in that** a plurality of generators (16) and/or consumers (15), in different power ranges of at least one wind power machine (R₁ to R₃), in particular of at least one hydraulic pump (7), are in each case individually controllable and at least partially activatable in an output- and/or pressure-dependent manner by means of a monitoring unit (23).

6. Wind power machine according to at least one of claims 1 to 5, **characterized in that** the at least one hydraulic pump (7) is connected to and drives a consumer (15), in particular a generator (16).

7. Wind power machine according to at least one of claims 1 to 6, **characterized in that** the consumer (15), in particular the generator (16) is drivable externally by the wind power machine, in particular by the rotor element (5) via the hydraulic pump (7).

8. Wind power machine according to at least one of claims 1 to 7, **characterized in that** a plurality of individual wind power machines (R₁, R₂) having rotor elements (5) and connected hydraulic pumps (7) are connectable to and drive a common consumer (15), in particular a common generator (16).

9. Wind power machine according to at least one of claims 1 to 8, **characterized in that** the hydraulic pump (7) directly adjoins the rotor element (5) and is connected by lines (8, 9) to a converter (14) of the generator (16), wherein the converter (14) drives the generator (16).

10. Wind power machine according to at least one of claims 1 to 9, **characterized in that** for control and/or adjustment and/or braking purposes an adjustable throttle element (11) and/or an adjustable valve (12) is inserted into at least one line (8, 9).

11. Wind power machine according to at least one of claims 1 to 10, **characterized in that** between hydraulic pump (7) and consumer (15), in particular generator (16), at least one pressure compensating device (13), in particular an expansion tank, is inserted for pressure- and/or pulsation compensation.

12. Wind power machine according to at least one of claims 1 to 11, **characterized in that** the rotor element (5) drives the hydraulic pump (7) via a rotor shaft (6).

13. Wind power machine according to at least one of claims 1 to 12, **characterized in that** it comprises a tower (1) having at one end a rotatable tower attachment (4), wherein in the tower attachment (4) the rotor element (5) is rotatably supported and connected there to the hydraulic pump (7).

14. Wind power machine according to claim 13, **characterized in that** the lines (8, 9), rotationally uncoupled by means of a coupling (10), are run through the tower (1) to a consumer (15), in particular generator (16), disposed in the tower (1) or on the tower (1) or outside of the tower (1).

15. Wind power machine according to claim 13 or 14, **characterized in that** a plurality of hydraulic pumps (7) of different wind power machines (R₁, R₂) are connectable to at least one generator (16).

16. Wind power machine according to at least one of claims 1 to 15, **characterized in that** a plurality of wind power machines (R₁, R₂) are connectable in each case by line (8) and return line (9) to a common supply line (18) and a common return line (19), to which at least one converter (14) and to the latter at least one consumer (15) and/or generator (16) is connected.

17. Wind power machine according to at least one of claims 1 to 16, **characterized in that** the consumer (15) is designed as a pump for delivering water into a higher-level reservoir.

18. Wind power machine according to claim 17, **characterized in that** the higher-level reservoir is connected to a lower-level turbine for driving a generator (16).

## Revendications

1. Moteur éolien destiné à générer de l'énergie, avec au moins un élément de rotor (5) pouvant être entraîné par le vent et des utilisateurs (15) reliés directement ou indirectement à ce dernier,
**caractérisé par le fait**
**que** l'élément de rotor (5) entraîne, directement ou indirectement par l'intermédiaire d'un élément de transmission (22) connecté entre l'élément de rotor (5) et les pompes hydrauliques (7), une pluralité de pompes hydrauliques (7), la pluralité de pompes hydrauliques (7) pouvant être connectées, en fonction de la puissance, par l'élément de rotor (5), par l'intermédiaire d'au moins un dispositif de réglage (20) et la pluralité de pompes hydrauliques (7) étant disposées dans un couronnement de tour (4) et les pompes hydrauliques (7) pouvant être connectées à différents niveaux de puissance, afin d'optimiser la puissance.

2. Moteur éolien destiné à générer de l'énergie, avec au moins un élément de rotor (5) pouvant être entraîné par le vent et des utilisateurs (15) reliés directement ou indirectement à ce dernier, **caractérisé par le fait qu'**une pluralité de moteurs éoliens avec une pluralité de pompes hydrauliques (7), disposés dans un couronnement de tour, alimentent une pluralité d'utilisateurs (15) de manière réglable en fonction de la puissance, les utilisateurs (15) étant subdivisés en différents niveaux de puissance, et la puissance fournie par les moteurs éoliens (R₁ à R₃) pouvant être répartie, par l'intermédiaire d'au moins un dispositif de commande (21) et en conséquence de manière spécifique à la puissance sur les utilisateurs (15).

3. Moteur éolien selon la revendication 1 ou 2, **caractérisé par le fait qu'**une pluralité de moteurs éoliens présente une pluralité de pompes hydrauliques (7) pouvant être connectées et qui alimentent, de manière spécifique à la puissance, une pluralité de générateurs (16) et/ou d'utilisateurs (15) réglables et connectables.

4. Moteur éolien selon au moins l'une des revendications 1 à 3, **caractérisé par le fait que** les utilisateurs (15) sont des générateurs (16).

5. Moteur éolien selon au moins l'une des revendications 1 à 3, **caractérisé par le fait qu'**une pluralité de générateurs (16) et/ou d'utilisateurs (15) peuvent être commandés selon différents niveaux de puissance d'au moins un moteur éolien (R₁ à R₃), en particulier d'au moins une pompe hydraulique (7), chacun individuellement, de manière réglable et au moins partiellement en fonction de la puissance et/ou de la pression, par l'intermédiaire d'une unité de contrôle (23).

6. Moteur éolien selon au moins l'une des revendications 1 à 5, **caractérisé par le fait que** l'au moins une pompe hydraulique (7) est reliée à un utilisateur (15), en particulier à un générateur (16) et entraîne ce dernier.

7. Moteur éolien selon au moins l'une des revendications 1 à 6, **caractérisé par le fait que** l'utilisateur (15), en particulier le générateur (16), peut étire entraîné extérieurement au moteur éolien, en particulier à l'élément de rotor (5), par l'intermédiaire de la pompe hydraulique (7).

8. Moteur éolien selon au moins l'une des revendications 1 à 7, **caractérisé par le fait qu'**une pluralité de moteurs éoliens (R₁, R₃) individuels à éléments de rotor (5) et pompes hydrauliques (7) raccordées peuvent être raccordés à un utilisateur commun (15), en particulier à un générateur commun (16), et entraînent celui-ci.

9. Moteur éolien selon au moins l'une des revendications 1 à 8, **caractérisé par le fait que** la pompe hydraulique (7) est raccordée directement à l'élément de rotor (5) et est reliée, par l'intermédiaire de conduites (8, 9), à un convertisseur (14) du générateur (16), le convertisseur (14) entraînant le générateur (16).

10. Moteur éolien selon au moins l'une des revendications 1 à 9, **caractérisé par le fait que** pour la commande et/ou le réglage et/ou pour le freinage est placé, dans au moins un conduit (8, 9), un élément d'étranglement réglable (11) et/ou une soupape réglable (12).

11. Moteur éolien selon au moins l'une des revendications 1 à 10, **caractérisé par le fait qu'**entre la pompe hydraulique (7) et l'utilisateur (15), en particulier le générateur (16), est placé au moins un dispositif de compensation de pression (13), en particulier un réservoir de compensation de pression, destiné à compenser la pression et/ou les pulsations.

12. Moteur éolien selon au moins l'une des revendications 1 à 11, **caractérisé par le fait que** l'élément de rotor (5) entraîne, par l'intermédiaire d'un arbre de rotor (6), la pompe hydraulique (7).

13. Moteur éolien selon au moins l'une des revendications 1 à 12, **caractérisé par le fait qu'**il présente une tour (1) et, du côté de l'extrémité, un couronnement de tour rotatif (4), dans le couronnement de tour (4) étant monté de manière rotative l'élément de rotor (5) et celui-ci y étant relié à la pompe hydraulique (7).

14. Moteur éolien selon la revendication 13, **caractérisé par le fait que** par l'intermédiaire d'un couplage (10) découplé en rotation, les conduits (8, 9) sont menés, à travers la tour (1), vers un utilisateur (15), en particulier générateur (16), disposé dans la tour (1) ou sur la tour (1) ou extérieurement à la tour (1).

15. Moteur éolien selon la revendication 13 ou 14, **caractérisé par le fait que** plusieurs pompes hydrauliques (7) de différents moteurs éoliens (R₁, R₂) peuvent être raccordées à au moins un générateur (16).

16. Moteur éolien selon au moins l'une des revendications 1 à 15, **caractérisé par le fait que** plusieurs moteurs éoliens (R₁, R₂) peuvent être raccordés, chacun, par l'intermédiaire du conduit (8) et du conduit de retour (9), à un conduit d'alimentation commun (18) et à un conduit de retour commun (19) auxquels est raccordé au moins un convertisseur (14) et, à ce dernier, au moins un utilisateur (15) et/ou générateur (16).

17. Moteur éolien selon au moins l'une des revendications 1 à 16, **caractérisé par le fait que** l'utilisateur (15) est réalisé sous forme de pompe pour alimenter de l'eau dans un réservoir situé plus haut.

18. Moteur éolien salon la revendication 17, **caractérisé par le fait que** le réservoir situé plus haut est relié à une turbine située plus bas, pour entraîner un générateur (16).
